Europäisches Patentamt

European Patent Office

Office européen des brevets

(19)

(11) Publication number: **0 021 854**
**A1**

## (12) EUROPEAN PATENT APPLICATION

(21) Application number: **80302243.3**

(22) Date of filing: **02.07.80**

(51) Int. Cl.³: **C 10 G 35/14**
**B 01 J 8/42**

(30) Priority: **02.07.79 US 54032**
**02.07.79 US 54033**

(43) Date of publication of application:
**07.01.81 Bulletin 81/1**

(84) Designated Contracting States:
**DE FR GB IT NL**

(71) Applicant: **Exxon Research and Engineering Company**
**P.O.Box 390 200 Park Avenue**
**Florham Park New Jersey 07932(US)**

(72) Inventor: **Voorhies, Alexis, Jr.**
**2569 East Lakeshore Drive**
**Baton Rouge, Louisiana(US)**

(72) Inventor: **Mayer, Francis Xavier**
**5277 Whitehaven Street**
**Baton Rouge, Louisiana(US)**

(72) Inventor: **Cohen, Saul Jay**
**16007 Craighurst Drive**
**Houston, Texas(US)**

(74) Representative: **Somers, Harold Arnold et al,**
**5 Hanover Square**
**London W1R OHQ(GB)**

(54) Process for reforming hydrocarbons in a magnetically stabilized bed of fluidized, magnetizable reforming catalyst, and reformed hydrocarbon product.

(57) A process wherein, in a reforming zone, a bed of fluidizable magnetizable catalytic particles of average diameter ranging to about 800 microns is contacted, and fluidized, with a naphtha feed and hydrogen at reforming conditions to produce a naphtha product of improved octane while simultaneously the fluidized bed is subjected to an axially applied magnetic field. The fluidized catalytic particles are withdrawn from the reforming zone, preferably continuously, regenerated and recycled. In a preferred embodiment, the catalyst is passed to a regeneration zone and contacted with hydrogen, or a hydrogen-containing gas, wherein coke, and preferably coke precursor materials, are removed, and thereafter regenerated catalyst is recycled, preferably continuously, to the reforming zone.

# Catalytic Reforming of Hydrocarbons in a Magnetically Stabilized Bed of Fluidized Magnetizable Reforming Catalyst

The present invention relates to catalytic reforming of hydrocarbons in a magnetically stabilized bed of fluidized, magnetizable reforming catalyst.

Catalytic reforming, or hydroforming, is a well established industrial process employed by the petroleum industry for improving the octane quality of naphthas or straight run gasolines. In reforming, a multi-functional catalyst is employed which contains a metal hydrogenation-dehydrogenation (hydrogen transfer) component, or components, substantially atomically dispersed upon the surface of a porous, inorganic oxide support, notably alumina. Noble metal catalysts, notably of the platinum type, are currently employed, reforming being defined as the total effect of the molecular changes, or hydrocarbon reactions, produced by dehydrogenation of cyclohexanes and dehydro-isomerization of alkylcyclopentanes to yield aromatics; dehydrogenation of paraffins to yield olefins; dehydrocyclization of paraffins and olefins to yield aromatics; isomerization of n-paraffins; isomerization of alkylcyclo-paraffins to yield cyclohexanes; isomerization of substituted aromatics; and hydrocracking of paraffins which produces gas, and inevitably coke, the latter being deposited on the catalyst.

Platinum has been widely commercially used in recent years in the production of reforming catalysts, and platinum-on-alumina catalysts have been commercially employed in refineries for the last few decades. In the last decade, additional metallic components have been added to platinum as promoters to further improve the activity or selectivity or both, of the basic platinum catalyst, e.g., iridium, rhenium, tin, and the like. Platinum-irridium catalysts, for example, possess superior activity for use in reforming operations as compared with platinum catalysts. Platinum-rhenium catalysts, by way of further example, possess admirable selectivity as contrasted with platinum catalysts, selectivity being defined as the ability of the catalyst to produce high yields of $C_5+$ liquid products with concurrent low production of normally gaseous hydrocarbons, i.e., methane and other gaseous hydrocarbons, and coke.

In a conventional process, a series of reactors constitute the heart of the reforming unit. Each reforming reactor is generally provided with fixed beds of the catalyst which receive upflow or downflow feed, and each is provided with a preheater or interstage heater, because the reactions which take place are endothermic. A naphtha feed, with hydrogen, or recycle gas, is cocurrently passed through a preheat furnace and reactor, and then in sequence through subsequent heaters and reactors of the series. The product from the last reactor is separated into a liquid fraction, i.e., a $C_5+$ or $C_5/430°F$ fraction, and a vaporous effluent. The latter is a gas rich in hydrogen, which usually contains small amounts of normally gaseous hydrocarbons, from which hydrogen is separated from the $C_5+$ liquid product and recycled to the process to minimize coke production.

The activity of the catalyst gradually declines due to the build-up of coke. Coke formation is believed to result from the deposition of coke precursors such as anthracene, coronene, ovalene and other condensed ring aromatic molecules on the catalyst, these polymerizing to form coke. During operation, the temperature of the process is gradually raised to compensate for the activity loss caused by the coke deposition. Eventually, however, economics dictates the necessity of reactivating the catalyst. Consequently, in all processes of this type the catalyst must necessarily be periodically regenerated by burning off the coke at controlled conditions. In the regeneration, the coked catalyst is contacted with oxygen at flame front temperatures ranging about 800°F to about 1050°F, this being generally followed by a secondary burn with increased oxygen concentrations as coke is depleted from the catalyst. Maximum temperatures are limited by the sintering temperature of the catalyst, generally about 1100°F or 1200°F.

Two major types of reforming are generally practiced in the multi reactor units, both of which necessitate periodic reactivation of the catalyst, the initial sequence of which requires regeneration, i.e., burning the coke from the catalyst. Reactivation of the catalyst is then completed in a sequence of steps wherein the agglomerated metal hydrogenation-dehydrogenation components are atomically redispersed. In the semi-regenerative process, the first type, the entire unit is operated by gradually and progressively increasing the temperature to maintain the activity of the catalyst caused by the coke deposition, until finally the entire unit is shut down for regeneration, and reactivation, of the catalyst. In the second, or cyclic type of process, the reactors are individually isolated, or in effect swung out of line by various manifolding arrangements, motor operated valving and the like. The catalyst is regenerated to remove the coke deposits, and then reactivated while the other reactors of the series remain on stream. A "swing reactor" temporarily replaces a reactor which is removed from the series for regeneration and reactivation of the catalyst, until it is put back in series.

The reactors of modern reforming units employ noble metal catalysts of relatively large particle size. Typically the catalyst is employed as fixed beds of one-sixteenth inch diameter extrudates, the catalyst of the individual reactors requiring about 16 to 20 hours for regeneration, and reactivation of the catalyst because of the number and duration of the individual steps. Albeit, smaller particles would offer reduced diffusion resistance, smaller particles are not normally used. This is because the catalyst size in fixed bed operations is limited primarily by pressure drop considerations, the smaller the size of the catalyst the greater the pressure drop through the catalyst bed.

Cyclic units offers advantages over semi-regenerative units despite the extra capital cost and extensive valving and manifolding requirements necessary to permit isolating individual reactors of the unit from the on-oil circuit for regeneration. Thus, in a cyclic reforming unit the individual reactors of the multi-reactor unit can be isolated, the catalyst regenerated, and reactivated, at intervals. By adjusting the regeneration frequency, the unit can be economically designed for the minimum loading of the hydrogenation-dehydrogenation metal, or metals components on the catalyst while maintaining an optimum yield of $C_5+$ reformate. Accordingly, cyclic reforming units are generally employed in preference to semi-regenerative units when it is desired to produce maximum $C_5+$ liquid of high octane.

Fluid bed reforming processes wherein catalyst particles of small sizes are circulated between a reactor and regenerator vessel are known, though such processes are less common than fixed bed reforming processes. The fluid bed reforming processes suffer a major disadvantage as contrasted with fixed bed processes because gas-solids contacting is far less efficient in fluid bed processes than in fixed bed processes. This is due to the large amount of gas by-passing and high solids back-mixing in fluid bed reactors. Bubbles of gas, or gas which contain solids particles in dilute phase, form and pass up through the emulsion phase of the reactor bed. The net effect of this phenomenon is that the bubbles do not intimately contact the solids particles, and have a relatively short contact time in the reactor; the efficiency of the process decreasing directly with the increasing size and velocity of the bubbles. Conversion patterns thus approach those of stirred tanks rather than those of plug flow reactors, the latter of which produces the desired higher levels of conversion. Consequently, the residence time of catalytic particles within the bed of a reforming unit is determined by the amount of conversion that is required, these periods being of considerable length in fixed bed processes. Typically, the average residence time of catalyst particles within a fixed bed process is above about sixty hours, or greater. On the other hand, albeit the average residence time of catalyst particles within the fluidized bed of a fluid reformer is considerably shorter, the catalyst is well mixed and the age distribution of the particles is quite wide.

Whereas these types of processes, and reforming units, have generally performed well, it is nonetheless desirable to provide new or improved processes, and units, which are capable of achieving higher conversions in shorter reaction periods.

It is, accordingly, the primary object of this invention to provide a new and improved reforming process, particularly a short cycle reforming process which maintains a catalyst activity and selectivity approximating that of fresh, or freshly-reactivated catalyst and permits high severity operations with enhanced activity and $C_5+$ liquid yield as contrasted with present reforming operations.

A specific object is to provide a process as characterized which permits the use of catalyst having relatively low diffusion limitations, increased catalyst activity, and permits continuous operation of all portions of the unit within which the reforming operation is conducted, and rapid movement of the catalyst as a more cohesive, phase or phase of narrow age distribution.

A further object is to provide a process admirably suitable for reforming a wide variety of feeds, particularly at high temperatures and low pressures, or other high severity conditions.

These objects and others are accomplished in accordance with the present invention, embodying a process wherein, in a reforming zone, a bed of fluidizable magnetizable catalytic particles is contacted, and fluidized, with a hydrocarbon, or naphtha feed and hydrogen at reforming conditions to produce a hydrocarbon, or naphtha product of improved octane while simultaneously the fluidized bed is subjected to an axially applied magnetic field, the product is withdrawn, the fluidized catalytic particles are withdrawn from the reforming zone, preferably continuously, and passed to a regeneration zone wherein coke is removed, and the catalyst reactivated and recycled, preferably continuously, to the reforming zone. In one of its aspects, the catalyst is regenerated by burning the coke from the catalyst while the catalyst is in contact with an oxygen-containing gas. In another, the coked catalyst is contacted with hydrogen, or a hydrogen-containing gas, and coke, and preferably coke precursor materials, are removed, and thereafter the regenerated catalyst is recycled, preferably continuously, to the reforming zone. In its preferred aspects the magnetizable catalytic particles are of small size, generally of average diameter ranging to about 800 microns, and preferably range from about 50 microns to about 500 microns, more preferably from about 100 microns to about 300 microns. The residence time of the catalyst within the reforming zone in a process wherein coke is burned from the catalyst ranges no more than about 100 hours, and in a process wherein the catalyst is regenerated by contact with hydrogen the residence time ranges no more than about 20 hours. Preferably, the residence time of the catalyst in the reforming zone where the catalyst is regenerated by burning in the presence of an oxygen-containing gas ranges from about 0.1 hours to about 20 hours, preferably from about 8 hours to about 12 hours; and where the catalyst is regenerated by contact with hydrogen the residence time ranges from about 0.1 hours to about 10 hours, more preferably from about 0.25 hours to about 3 hours.

The application of a magnetic field upon the bed of fluidized, magnetizable catalytic particles to stabilize the bed and thereby suppress, or minimize bubble formation, it has been found, produces bed characteristics which greatly improve gas-solids contacting and lessens the need for long residence time; and yet the state of the bed is such that it can be rapidly recycled between reactor and regenerator. The properties of the bed in a magnetically stabilized state approach those of plug flow, thus providing the higher gas-solids contacting efficiencies offered by fixed bed contacting, and yet the bed, since it is fluidized, offers the advantages of fluidized beds for purposes of transport. Shorter contact times become feasible, and desirable because of higher average catalyst activity level. Moreover, the small particles which in a fixed bed would have a prohibitively high pressure drop at reasonable gas velocities provide very large surface areas which enhance catalysis and gas-solids contacting.

In one embodiment, the fluidized catalyst is continuously transferred from the reforming zone to the regeneration zone and therein contacted with oxygen, or gas which contains oxygen at high oxygen partial pressures, at temperatures ranging from about 700°F to about 1050°F, preferably from about 850°F to about 975°F, and total pressures ranging from about 50 pounds per square inch (psi) to about 350 psi, preferably from about 100 psi to about 250 psi. The coke at these conditions is burned from the catalyst. The metal hydrogenation dehydrogenation components of the catalyst are then atomically redispersed by contact of the catalyst with a halogen, generally chlorine, at temperatures ranging from about 800°F to about 1000°F, preferably from about 900°F to about 975°F. A preferred sequence for the regeneration, and reactivation of a Group VIII noble metal catalyst, e.g., a platinum catalyst, is described as follows:

(1) The reactor, or reactors for reasons of safety are generally and preferably, purged or stripped with nitrogen or a flue gas to eliminate residual reformate, or hydrocarbons. This eliminates the possibility of an undesirable or uncontrollable combustion. The purging step should be conducted at about 900°F, or higher, to minimize hydrocarbon absorption by the catalyst.

(2) The deactivated catalyst, preferably, is first heated to oxidize the coke deposits, in a burn, or near burn, with a mixture of inert or non-reactive gas and oxygen, suitably flue gas and air. The oxygen content of the flue gas is gradually increased until the temperature ranges from about 800°F to about 1050°F, preferably from about 900°F to about 980°F. Pressure usually ranges from about 50 psi to about 350 psi, preferably from about 50 psi to about 200 psi. After removal of coke, as manifested by oxygen breakthrough above the catalyst bed, the burn is discontinued.

(3) A halogen treat is initiated to atomically redisperse any agglomerated metal and to restore halogen to the catalyst after all evidence indicates that the catalyst is essentially free of coke (no rising temperatures and no oxygen disappearance). A halogen, preferably chlorine or a compound which will generate chlorine in situ, is introduced with some oxygen, generally 6-20 wt. percent, into the reactor, or reactors, while the temperature is held between 600°F and about 1050°F, preferably from about 850°F to about 1000°F. The halogen treatment is continued for a period ranging from about 0.5 to about 24 hours, preferably 8 to about 12 hours, or for a time sufficient to build up the halogen content of the catalyst, preferably from about 0.8 to about 1 wt. percent.

(4) An oxygen-containing stream, preferably air, or gas containing from about 6 to about 20 wt. percent oxygen, is passed into the reactor to rejuvenate the catalyst. During rejuvenation the temperature is gradually raised and then maintained at from about 500°F to about 1050°F, and preferably from about 850°F to about 975°F. The rejuvenation step is continued for a period ranging from about 0.5 to about 6 hours, preferably from about 2 to about 4 hours.

(5) For reasons of safety, it is highly desirable to purge with inert gas to remove oxygen to less than 0.5%.

(6) Hydrogen, or a hydrogen-containing stream is introduced into the reactor to reduce and dry the catalyst. The drying step is generally conducted at temperatures ranging from about 800°F to about 1000°F, preferably from about 850°F to about 950°F, for a period ranging from about 0.5 to about 6 hours, preferably from about 2 to about 4 hours. The system is then repressured and feed returned to the unit to conduct reforming.

It has been found, on the other hand, that the short reforming cycle can be best provided in operations wherein the fluidized catalyst is continuously transferred from the reforming zone to the regeneration zone and therein contacted with hydrogen, or gas which contains hydrogen at high hydrogen partial pressures, at temperatures ranging from about 900°F to about 1050°F, preferably from about 950°F to about 1000°F, and total pressures ranging from about 50 pounds per square inch (psi) to about 500 psi, preferably from about 150 psi to about 300 psi. The hydrogen, at these conditions strips and reacts with the materials on the catalyst which are capable of forming the carbon precursors before significant polymerization of this material to coke has occurred. The hydrogen removes the hydrocarbon contaminants and restores the catalyst to fresh activity. Generally, effective removal of coke precursors from the catalyst results by maintaining a regenerator residence time less than about 20 hours. A regenerator residence time of from about 0.25 hour to about 10 hours is generally satisfactory, and preferably a residence ranging from about 0.5 hour to about 5 hours is provided, while contacting the catalyst with from about 1 standard cubic foot (SCF) to about 800 SCF of hydrogen per hour per pound of catalyst, preferably with from about 5 SCF to about 100 SCF of hydrogen per hour per pound of catalyst. Hydrogen partial pressures range from about 30 psi to about 600 psi, preferably from about 150 psi to about 300 psi. By avoiding the formation of coke on the catalyst the activity and selectivity of the catalyst can be optimized because the feed naphtha is continuously contacted with a fresh, more highly active catalytic surface.

The use of hydrogen to avoid, or suppress, coke formation provides a significant advantage in that high sulfur can be tolerated without adverse effects on catalyst activity, selectivity and operating cycle life, and without sulfate poisoning of the catalyst. It is thus known that sulfur can enter reforming reactors, principally as sulfur compounds contained in the feed. Normally, feed sulfur compounds are largely converted to hydrogen sulfide by the reforming catalyst, part of the hydrogen sulfide leaving the last reactor in the recycle gas so that the total amount of hydrogen sulfide entering the reactor can be several times as great as the amount entering with the fresh feed. Sulfur is undesirable in reforming feeds for several reasons. Among these reasons is that sulfur is converted at reforming conditions to hydrogen sulfide which reduces the aromatization activity of the catalyst and causes poor selectivity with noble metal catalysts, this effect becoming acute when the sulfur content of the feed exceeds about 100 ppm. Even lower sulfur concentrations can prove troublesome, however, a principal reason being that sulfur carried over with the catalyst to the regeneration zone is oxidized to sulfur trioxide, and then converted into a sulfate which is a catalyst poison. Hence, in present commercial operations it is generally desirable that the sulfur concentration in the feed not exceed about 10 parts, and preferably about 5 parts, per million parts of feed (ppm). At these concentrations, sulfate poisoning of the catalyst can usually be avoided provided that sufficient hydrogen is added or recycled to strip out the sulfur, as hydrogen sulfide, from the reaction mixture. By maintaining low sulfur in the feed and a sufficiently high recycle gas rate therefore, sulfur accumulation and consequent catalyst poisoning can be avoided.

The use of high sulfur feeds is thus not possible in the more conventional method which utilizes an oxidizing gas to burn coke from the catalyst, because, as suggested, the oxidizing atmosphere converts the sulfur on the catalyst to sulfur trioxide which forms sulfate, a catalyst poison. High sulfur feeds, or feeds containing as much as about 400 parts of sulfur, per million parts (ppm) by weight of feed, and greater, however, can be processed without difficulty in accordance with this invention because sulfate is not formed.

In accordance with this invention, it has been found that contact of a naphtha with a fluidized frequently regenerated, small particle size catalyst provides higher reaction rates, as well as considerable hydrogen production and $C_5+$ liquid volume yield advantages, over e.g., a conventional reforming operation utilizing a fixed bed of a similar catalyst composition, especially larger diameter conventionally sized extrudate catalyst, at conditions similar other than for the shortened cycle time. Moreover, since the catalyst is frequently regenerated, reforming can be conducted to advantage at considerably higher severities than in more conventional operations. This makes it feasible to operate at higher temperatures, lower pressures, and at lower gas rates to provide greater oil throughput and higher $C_5+$ liquid yields.

A principal advantage of this process results from its ability to operate at higher severities resultant from the shortened cycle which minimizes the adverse effects of catalyst deactivation at the higher severities.

Consequently, the process achieves its highest utility in high temperature operation for greater throughput, or lower pressure operation for higher yields, or both, as contrasted with e.g., conventional cyclic reforming. For example, it has been found that a 6-8 vol. % $C_5$+ liquid yield improvement and a two-fold throughput advantage can be obtained over a conventional downflow, fixed bed cyclic reforming unit similarly operated with a platinum-rhenium catalyst [945°F, 275 psig (145 psi $H_2$ pp) 2000 SCF/Bbl], except that the unit practicing the process of this invention utilizes a 300 micron diameter spherical catalyst with 10 hours between regenerations and the cyclic unit uses a 1/16 inch diameter extrudate with 96 hours between regenerations.

Operation in accordance with this invention provides considerably higher reaction rates, and greatly improved activity and selectivity than conventional reforming operations. It has been found that the reduced diffusional resistance due to the use of the smaller catalyst particles accounts for about one-fifth of this activity and yield advantage, with the remaining four-fifth advantage being apparently due to the shortened cycle and lower coke levels. Therefore, whereas a magnetizable catalyst of essentially any particle size which is fluidizable can be employed, particles of relative small size are preferred because they offer less diffusion resistance than larger particles. Albeit such small particles cannot be used in conventional semi-regenerative or cyclic reforming units, such particles can be readily employed and are preferred in the process of this invention. Similarly, diffusion resistance can be decreased by the use of catalyst having relatively small pore sizes vis-a-vis large pore size catalysts. Higher reaction rates and selectivity advantages are offered by the considerably reduced average coke levels associated with the more frequent catalyst regenerations employed in the process of this invention, particularly as practiced in hydrogen stripping and regeneration.

A feature of this invention is that a wide variety of reforming catalysts can be utilized in accordance with the present process, including both non-noble and noble metal catalysts; the former of which were in the past overshadowed by advances in the art of catalysis. Non-noble metal reforming catalysts such as the molybdate catalysts (e.g., $MoO_2$-on-alumina), which were thus commercially replaced by the noble metal catalysts because of their lesser activity, lower activity maintenance and selectivity, can thus be used to advantage in the process of this invention, particularly at high severities. High severity conditions can thus overcome these former limitations of the non-noble metal catalysts, and despite their fall from prominence, they have long been recognized as being highly tolerant to sulfur and nitrogen, and can be used to reform olefins; which advantages are retained in this new process. The noble metal catalysts, nonetheless, are particularly useful in the practice of this invention.

The catalyst employed in accordance with this invention is necessarily constituted of composite particles which contain, besides a carrier or support material, sufficient amounts of a ferromagnetic or ferrimagnetic material to make the particles magnetizable, a hydrogenation-dehydrogenation component, or components, a halide component and, preferably, the catalyst is sulfided. Suitably, the magnetizable materials include ferromagnetic and ferrimagnetic substances including, but not limited to, magnetic iron oxide, $Fe_3O_4$, ferrites of the form $MO \cdot Fe_2O_3$, wherein M is a metal or mixture of metals such as Zn, Mn, Cu, etc.; and ferromagnetic elements including iron, nickel, cobalt and gadolinium, alloys of ferromagnetic elements, etc. The composite particles generally include from about 50 percent to about 99 percent, preferably from about 80 percent to about 95 percent, by volume of the non-magnetizable material. In general, the non-magnetizable material will include a vast number of conventional materials which are inert and/or known to catalyze the desired reaction.

The magnetizable component can be directly incorporated with the non-magnetizable material. For example, one or more of the aforedescribed non-magnetizable materials may be impregnated with a soluble precursor of a ferromagnetic or ferrimagnetic substance which is subsequently reduced to render the particles ferromagnetic or ferrimagnetic. Alternatively, the ferromagnetic or ferrimagnetic material may be incorporated into the non-magnetizable component by encapsulation of finely divided ferromagnetic or ferrimagnetic material. The magnetization of the magnetizable, fluidizable composite particles of the invention in the bed should have a magnetization of at least 10 gauss. Generally for high gas velocities, the particles will have a magnetization, as being imparted by the applied magnetic field, of at least 50 gauss, preferably at least 100 gauss and more preferably at least about 150 gauss, e.g., 150 gauss to 400 gauss. For those processes advantageously operated at very high gas velocities, the magnetization of the magnetizable, fluidizable composite particles of the invention may be up to about 1000 gauss or more.

A porous, refractory inorganic oxide, particularly alumina, is employed as a carrier material, or support. The support can contain, e.g., one or more of alumina, bentonite, clay, diatomaceous earth, zeolite, silica, activated carbon, magnesia, zirconia, thoria, and the like; though the most preferred support is alumina to which, if desired, can be added a suitable amount of other refractory carrier materials such as silica, zirconia, magnesia, titania, etc., usually in a range of about 1 to 20 percent, based on the weight of the support. A preferred support for the practice of the present invention is one having a surface area of more than 50 $m^2/g.$, preferably from about 100 to about 300 m$^2$/g., a bulk density of about 0.3 to 1.0 g/ml, preferably about 0.4 to 0.8 g/ml, an average pore volume of about 0.2 to 1.1 ml/g., preferably about 0.3 to 0.8 ml/g., and an average pore diameter of about 30 to 300Å.

The metal hydrogenation component can be composited or intimately associated with the porous inorganic oxide support or carrier by various techniques known to the art such as ion-exchange, coprecipitation with the alumina in the sol or gel form, and the like. For example, the catalyst composite can be formed by adding together suitable reagents such as salt of platinum and ammonium hydroxide or carbonate, and a salt of aluminum such as aluminum chloride or aluminum sulfate to form aluminum hydroxide. The aluminum hydroxide containing the salts of platinum can then be heated, dried, formed into pellets or extruded, and then calcined in nitrogen or other non-agglomerating atmosphere. The metal hydrogenation components can also be added to the catalyst by impregnation, typically via an "incipient wetness" technique which requires a minimum of solution so that the total solution is absorbed, initially or after some evaporation.

Various metals from Group VI-B and Group VIII noble metals can be composited with the support, usually as an element, or a compound or salt of an element (Periodic Table of the Elements; Sargent Welch Scientific Company, Copyright 1968). Exemplary of the non-noble metal hydrogenation-dehydrogenation metals are chromium, molybdenum and tungsten. Illustrative Group VIII metal hydrogenation-dehydrogenation metals are palladium, rhodium, ruthenium, iridium, osmium and platinum, platinum being a highly preferred component. Promoters can be added, if desired. Such promoters can include suitably a component selected from the Group IV metals, Group VI metals, Group VII metals, and Group VIII metals. For example, germanium, tin, lead, osmium, ruthenium, or rhodium can be used, and iridium or rhenium, or both, are preferred. Although one or more of these components can be added by any of the conventional methods, it is preferable to add them by impregnation prior to, following, or simultaneously with the impregnation of the noble metal.

It is generally preferred to deposit the Group VI-B or Group VIII noble metal, or metals, and metals used as promoters, if any, on a previously pilled, pelleted, beaded, or extruded particulate support material by the impregnation method. Pursuant to the impregnation method, porous refractory inorganic oxides in dry or solvated state are contacted, either alone or admixed, or otherwise incorporated with a metal or metals-containing solution, or solutions, and thereby impregnated by either the "incipient wetness" technique, or a technique embodying absorption from a dilute or concentrated solution, or solutions, with subsequent filtration or evaporation to effect total uptake of the metallic components.

The Group VI-B metal component, when employed is supported on the carrier within the range of from about 0.01 to 3 percent, preferably from about 0.05 to 1 percent, based on the weight of the catalyst (dry basis). The Group VIII noble metal component is supported on the carrier within the range of from about 0.01 to 3 percent, preferably from about 0.05 to 1 percent, based on the weight of the catalyst (dry basis). In compositing the metals with the carrier, essentially any soluble compound can be used, but a soluble compound which can be easily subjected to thermal decomposition and reduction is preferred, for example, inorganic salts such as halide, nitrate, inorganic complex compounds, or organic salts such as the complex salt of acetylacetone, amine salt, and the like. Where, e.g., the Group VIII noble metal is platinum, platinum chloride, platinum nitrate, chloroplatinic acid, ammonium chloroplatinate, potassium chloroplatinate, platinum polyamine, platinum acetylacetonate, and the like, are preferably used. The promoter metal, when employed, is added in concentration ranging from abut 0.01 to 3 percent, preferably from about 0.05 to about 1 percent, based on the weight of the catalyst.

To enhance catalyst performance in reforming operations, it is also required to add a halogen component. Fluorine and chlorine are preferred halogen components. The halogen is contained on the catalyst within the range of 0.1 to 3 percent, preferably within the range of about 0.3 to 2 percent, based on the weight of the catalyst. When using chlorine as a halogen component, it is contained on the catalyst within the range of about 0.2 to 2 percent, preferably within the range of about 0.5 to 1.5 percent, based on the weight of the catalyst. The introduction of halogen into catalyst can be carried out by any method and at any time of the catalyst preparation, for example, prior to, following or simultaneously with the impregnation. In the usual operation, the halogen component is introduced simultaneously with the incorporation of the metal hydrogenation-dehydrogenation component. It can also be introduced by contacting a carrier material in a vapor phase or liquid phase with a halogen compound such as hydrogen fluoride, hydrogen chloride, ammonium chloride, or the like.

The catalyst is dried by heating at a temperature above about 80°F, preferably between about 150°F and 300°F, in the presence of nitrogen or oxygen, or both, in an air stream or under vacuum. The catalyst is calcined at a temperature between about 500°F to 1200°F, preferably about 500°F to 1000°F, either in the presence of oxygen in an air stream or in the presence of an inert gas such as $N_2$.

Sulfur is a highly preferred component, the sulfur content of the catalyst generally ranging to about 0.2 percent, preferably from about 0.05 percent to about 0.1 percent, based on the weight of the catalyst (dry basis). The sulfur can be added to the catalyst by conventional methods, suitably by breakthrough sulfiding of a bed of the catalyst with a sulfur-containing gaseous stream, e.g., hydrogen sulfide in hydrogen, performed at temperatures ranging from about 350°F to about 1050°F and at pressures ranging from about 1-40 atmospheres for the time necessary to achieve breakthrough, or the desired sulfur level.

The feed or charge stock can be a virgin naphtha, cracked naphtha, a naphtha from a coal liquefaction process, a Fischer-Tropsch naphtha, or the like. Such feeds can contain sulfur or nitrogen, or both, at fairly high levels. Typical feeds are those hydrocarbons containing from about 5 to 12 carbon atoms, or more preferably from about 6 to about 9 carbon atoms. Naphthas, or petroleum fractions boiling within the range of from about 80°F to about 450°F, and preferably from about 125°F to about 375°F, contain hydrocarbons of carbon numbers within these ranges. Typical fractions thus usually contain from about 15 to about 80 Vol. % paraffins, both normal and branched, which fall in the range of about $C_5$ to $C_{12}$, from about 10 to 80 Vol.% of naphthenes falling within the range of from about $C_6$ to $C_{12}$, and from 5 through 20 Vol.% of the desirable aromatics falling within the range of from about $C_6$ to $C_{12}$.

The fluidized bed of catalyst is, in all of its aspects, subjected to an axially applied magnetic field, either a time varying current (AC) or direct current (DC), preferably the latter.

In its preferred aspects a fluidized bed of the catalyst particles is stabilized by subjecting said bed to a non-time varying (direct current) and substantially uniform applied magnetic field having a substantial component along the direction of the external force field (which will generally be gravity) such that the solid particulate magnetizable and fluidizable material has a component of magnetization along the direction of the external force field. Preferably also, at least a portion of said bed containing the solid particulate magnetizable and fluidizable material is fluidized by a flow of fluid opposing said external force field at a superficial fluid velocity ranging between: (a) more than the normal minimum fluidization superficial fluid velocity required to fluidize said bed in the absence of said applied magnetic field; and, (b) less than the superficial fluid velocity required to cause time-varying fluctuations of pressure difference through said stably fluidized bed during continuous fluidization in the presence of said applied magnetic field. The strength of the magnetic field and its deviation from vertical are maintained so as to prevent and/or suppress the formation of bubbles in the fluidized media at a given fluid flow rate and with a selected fluidized particles makeup. A magnetically stabilized bed, and the characteristics of such a bed, is described in U.S. Patent 4,115,927 by Ronald E. Rosensweig, herewith incorporated by reference.

The reforming runs are initiated by adjusting the hydrogen and feed rates, and the temperature and pressure to operating conditions. The run is continued at optimum reforming conditions by adjustment of the major process variables, within the ranges described below:

| Major Operating Variables | Typical Process Conditions | Preferred Process Conditions |
|---|---|---|
| Pressure, Psig | 50-750 | 100-300 |
| Reactor Temp., °F | 900-1200 | 950-1050 |
| Recycle Gas Rate, SCF/B | 1000-10,000 | 1500-3000 |
| Feed Rate, W/Hr/W | 0.5-10 | 2.5-5 |

The invention will be more fully understood by reference to the following simulated data illustrating its more salient features. All parts are given in terms of weight except as otherwise specified.

In Example 1 there is demonstrated a process wherein the coke formed on the catalyst employed in the catalytic reforming portion of the operating cycle burned from the catalyst by contact with an oxygen-containing gas.

EXAMPLE 1

A platinum reforming catalyst is prepared by spray drying alumina gel admixed with a 410 stainless steel powder, the steel powder being present in the admixture in a concentration of 40 percent, based on the weight of the total admixture. The spray dried gel is then impregnated with a $H_2PtCl_6$-HCl mixture in sufficient amount to provide a granular admixture 100 to 200 mesh (Tyler Series) which, after drying, and calcining in air at 1000°F, contains 0.3 wt. % Pt and 0.6 wt. % chloride (dry basis).

In conducting a run, a reforming unit containing three stacked reactors in series is employed, the catalyst being charged into each reactor and therein fluidized by an ascending, hydrogen-hydrocarbon mixture injected at a constant superficial velocity. A feed and hydrogen gas mixture, after passage through a preheat and reheat furnace is injected into the first, or upper reactor wherein the reaction is conducted, and off gas therefrom is withdrawn, preheated in said furnace and then fed into the second reactor of the series; and off-gas withdrawn from said second reactor is again preheated in said furnace and reintroduced into the third, or last reactor of the series. The bed of each reactor, after expansion from a settled bed to a bed in fluidized state is subjected to a magnetic field of 300 oersteds provided by a solenoid containing 500 turns of conductor total in 5 modules, vertically spaced 13 feet apart, with an inside diameter of 30 feet and a height of 50 feet.

Catalyst solids are flowed downwardly from a higher reactor to a lower reactor of the series. Partially coked solids at a rate of 10.21 parts by weight per hour are taken from the lowermost reactor of the series and passed to a hydrocarbon stripping vessel wherein residual reformate is removed by contact with nitrogen. The stripped catalyst is then transported to a coke burn off vessel and contacted at a temperature of 950°F EIT with a recirculated flue gas stream containing 0.9 mole percent oxygen in a combustion zone to oxidize and remove the coke from the catalyst. The coke-free catalyst is then transported to a rejuvenation zone and contacted with flue gas containing 6 mole percent oxygen and 0.1 mole percent chlorine at a temperature of 940°F EIT, the residence time of the catalyst in the rejuvenation zone being 2 hours. Following rejuvenation, the catalyst is contacted with nitrogen in a separate vessel where oxygen absorbed by the catalyst is removed. Following the nitrogen stripping operation, the catalyst is transported to a water stripper where the catalyst is contacted with hydrogen, reduced, and then dried. The now coke free catalyst is then transferred to the upper reactor at a rate of 10.07 parts per hour. The reducing gas for this step is the net make gas from the operation.

An Aramco virgin naphtha feed having the inspection given in Table 1-A is charged upflow as a feed into each of the reactors.

## TABLE 1-A

| ASTM Distillation, °F | |
|---|---|
| Initial | 198 |
| 5 | 222 |
| 10 | 228 |
| 30 | 274 |
| 50 | 263 |
| 70 | 288 |
| 90 | 322 |
| 95 | 334 |
| Final B.P. | 366 |
| Gravity, ° API | 60.0 |
| Analysis, Vol. Percent | |
| Paraffins | 67.6 |
| Naphthenes | 19.5 |
| Aromatics | 12.9 |

Reforming is carried out at conditions required

to produce a 100 RON product, i.e., at 945°F EIT (average), 200 psig (average), 4000 SCF/Bbl (average) and 2.65 W/Hr/W. Throughout the reaction, catalyst is continuously withdrawn from the reactors as a fluidized moving bed, the catalyst is regenerated, reactivated and the coke-free, reactivated catalyst is returned to the reactors. The results are given in Table 1-B.

TABLE 1-B

Reforming of Aramco Virgin Naphtha Feed

950°F, 150 psig, 2000 SCF/B, 3.2 W/H/W

| Hrs. On Oil | $C_5$+ LV % at 100 RON |
|---|---|
| 10 | 77.7 |

It is thus found that operation with the 100-200 mesh particles provides a considerable improvement in yields as compared with an operation otherwise similar except that the run is conducted with a standard sized catalyst, e.g., a 1/16 inch diameter extrudate catalyst. In a corresponding run, or run conducted at similar conditions with a fresh 1/16 inch diameter extrudate catalyst over a similar ten hour on-oil period, a yield of 76.7 LV% (liquid volume percent) of the $C_5$+ liquid product is obtained. In a thirty hour period, on the other hand, a 70.9 LV% yield of the $C_5$+ liquid product is obtained. The shortened cycle length associated with the magnetically stabilized bed reforming operation thus provides a major advantage as contrasted with the conventional cyclic operation, an effect far greater than that which can be attributed to the smaller particle size alone. Even greater advantages can be obtained, however, due to the capability of the magnetic bed reformer for short cycle operation at higher severities. The capability of the fluidized magnetic bed in permitting more frequent regeneration than can be accomplished in a conventional fixed bed cyclic reformer minimizes the adverse effect of the higher activity at the higher severities. Consequently, the magnetically stabilized bed reformer can be operated at higher temperatures for greater throughput or lower pressures for higher yields, or both, than can be achieved in conventional cyclic reforming.

EXAMPLE 2

A platinum reforming catalyst is again prepared by spray drying alumina gel admixed with a 410 stainless steel powder, the steel powder being present in the admixture in a concentration of 40 percent, based on the weight of the total admixture. The spray dried gel is then impregnated with a $H_2PtCl_6$-HCl mixture in sufficient amount to provide a granular admixture 100 to 200 mesh (Tyler Series) which, after calcining in air at 1000°F, contains 0.3 wt. % Pt and 0.6 wt. % chloride (dry basis).

The catalyst is charged into a reactor unit comprised of three reactors in series, each provided with an interstage heater, and therein the catalyst is fluidized by an ascending, hydrogen-hydrocarbon mixture; the hydrogen being injected at a constant superficial velocity of 1 foot/second. The beds, after expansion, are each subjected to a magnetic field of 300 oersteds provided by a solenoid containing 500 turns of conductor total in 5 modules, vertically spaced 13 feet apart, with an inside diameter of 30 feet and a height of 50 feet. An Aramco virgin naphtha feed having the inspections given in Table I-A is again charged upflow into the reactors.

Reforming is carried out at condition required to produce a 100 RON $C_5$+ liquid product, i.e., at 950°F EIT, 150 psig, 2000 SCF/Bbl recycle gas and 3.2 W/Hr/W. Effluent is withdrawn from the last reactor of the series, and passed to a separator from where the $C_5$+ liquid product is separated from the gaseous components. The residence time of the catalyst within the reforming zone is ten hours. Throughout the reaction, catalyst is continuously withdrawn from the reactors as a fluidizing moving bed, the catalyst is transported to a regenerator and therein countercurrently contacted at 1000°F, and 150 psig, with recycle hydrogen from the separator to remove coke and coke precursors from the catalyst. Thereafter, catalyst is recycled to the reactors. The residence time of the catalyst within the regenerator is twice the residence time of the catalyst within the reformer unit. The conversion obtained after the ten hours on-oil is given in Table 2.

TABLE 2

Reforming of Aramco Virgin Naphtha Feed

950°F, 150 psig, 2000 SCF/B, 3.2 W/H/W

| Hrs. on Oil | $C_5+$ LV % at 100 RON |
|---|---|
| 10 | 77.7 |

It is thus found that operation with the 100-200 mesh particles provides a considerable improvement in yields as compared with an operation otherwise similar except that the run is conducted with a standard sized catalyst, e.g., a 1/16 inch diameter extrudate catalyst. In a corresponding run, or run conducted at similar conditions with a fresh 1/16 inch diameter extrudate catalyst over a similar ten hour on-oil period, a yield of 76.7 LV% (liquid volume percent) of the $C_5+$ liquid product is obtained. In a thirty hour period, on the other hand, a 70.9 LV% yield of the $C_5+$ liquid product is obtained. The shortened cycle length associated with the magnetically stabilized bed reforming operation thus provides a major advantage as contrasted with the conventional cyclic operation, an effect far greater than that which can be attributed to the smaller particle size alone. Even greater advantages can be obtained, however, due to the capability of the magnetic bed reformer for short cycle operation at higher severities. The capability of the fluidized magnetic bed in permitting more frequent regeneration than can be accomplished in a conventional fixed bed cyclic reformer minimizes the adverse effect of the higher activity at the higher severities. Consequently, the magnetically stabilized bed reformer can be operated at higher temperatures for greater throughput or at lower pressures for higher yields, or both, than can be achieved in conventional cyclic reforming.

A major advantage of hydrogen regeneration of a catalyst vis-a-vis a conventional oxidative regeneration of a catalyst is that oxidation of the sulfur is avoided, and hence high sulfur feeds can be processed. Also, the use of hydrogen does not cause significant agglomeration of the metal hydrogenation-dehydrogenation component, or components, and hence frequent redispersion of the metal hydrogenation-dehydrogenation component is unnecessary. Moreover, the process itself is simplified, and it is easier to maintain a given level of moisture within the recycle gases. Consequently, it is less troublesome to maintain the desired halide level on the catalyst, and corrosion problems are lessened.

To demonstrate the effectiveness of hydrogen stripping for regeneration of a catalyst, a charge of the 0.3 wt.% platinum-on-alumina catalyst (which also contains 0.6 wt.% chloride) is put into a reformer and contacted with recycle hydrogen and a feed substantially as identified in Table I-A. The reforming reaction is conducted at 950°F, 100 psig, and 2400 SCF/B for 15 minute periods, between which reaction cycles the catalyst is transferred to a regenerator and contacted with hydrogen at 950°F, 100 psig and 2400 SCF/B for 30 minute periods; and thereafter the hydrogen stripped catalyst is recycled to the reactor. This treatment is continued over a period of 33.0 hours on-oil and 132 cycles. Thereafter, the catalyst is treated with hydrogen at higher severity conditions, i.e., at 975°F, 200 psig, and 4800 SCF/B of hydrogen for a continuous period of 16 hours. Thereafter, an on-oil treatment of the catalyst is continued without regeneration at the new, higher severity conditions.

The activity of the catalyst, in terms of relative activity, and yield after 33.0 on-oil hours is given in Table 3 below:

TABLE 3

| Hours On Oil[1] | Cycles | Relative Activity | Yield $C_5+$, LV% @ 100 RON |
|---|---|---|---|
| 5.1 | 20 | 140 | -- |
| 8.5 | 34 | 136 | -- |
| 10.6 | 42 | 124 | -- |
| 15.4 | 62 | 111 | -- |
| 21.5 | 86 | 88 | -- |
| 28.0 | 112 | 90 | -- |
| 33.0 | 132 | 77 | 75.1 |
| 36.5[2] | 133 | 125 | 78.8 |
| 59.8 | 133 | 23 | -- |
| 84.2 | 133 | 21 | 59.9 |

[1] This is the actual time period that oil has actually flowed over the catalyst; and does not include the time that the catalyst is being regenerated with $H_2$.

[2] The catalyst was given an extended (16 hrs.) $H_2$ regeneration after approximately 35 hours on oil. Conditions: 975°F, 200 psig, 4800 SCF/B. The gas rate that is expressed is based on the feed rate during the on-oil cycle.

These data show a rather rapid catalyst activity decline between 5.1 and 33.0 on-oil hours. However, an extended hydrogen treatment at more severe conditions after 35 hours on-oil was adequate to rejuvenate the catalyst in large measure. Optimization of the conditions of hydrogen regeneration between on-oil cycles can result in essentially complete regeneration of the catalyst, optimum activity and $C_5+$ liquid yield.

It is apparent that various modifications and changes can be made in the conditions of operation, the specific identity of the catalyst and the like, without departing the spirit, and scope of the invention.

In this patent specification, temperatures given in $^{o}F$ are converted to $^{o}C$ by subtracting 32 and then dividing by 1.8.

Pressures given in pounds per square inch (psi) are converted to their equivalent in $kg/cm^2$ by multiplying by 0.07031.

Gas volumes given in standardized cubic feet (SCF) are converted to litres by multiplying by 28.32.

Liquid volumes given in barrels (Bbl or B) are converted to litres by multiplying by 159.0.

Lengths given in inches are converted to cms by mutliplying by 2.54 and lengths given in feet by 30.48.

The abbreviation "EIT" stands for "equivalent isothermal temperature".

- 28 -

0021854

CLAIMS

1.  A process for reforming a hydrocarbon feed which comprises passing the hydrocarbon feed and hydrogen in contact with a fluidized bed of reforming catalyst in a reforming zone at reforming conditions, characterized by contacting and fluidizing, in the reforming zone at reforming conditions, a bed of fluidizable, magnetizable catalytic particles of average diameter in the range of up to about 800 microns with a hydrocarbon feed and hydrogen while simultaneously subjecting the bed to an axially applied magnetic field; recovering or withdrawing a product of improved octane characteristics from said reforming zone; passing catalyst particles from said reforming zone to a catalyst regeneration zone; regenerating catalyst particles within said regeneration zone; and then recycling regenerated catalyst to said reforming zone.

2.  The process of claim 1 characterized in that the catalyst within said regeneration zone is contacted with hydrogen or gas containing hydrogen at elevated temperature and at partial pressures sufficient to regenerate said catalyst, and the regenerated catalyst is recycled to said reforming zone.

3.  The process of claim 2 characterized in that the rate at which the catalyst is withdrawn from said reforming zone and recycled thereto is sufficient to provide a residence time in said reforming zone of no more than about 20 hours.

4.  The process of claim 1 wherein the catalyst within said regeneration zone is contacted with oxygen or an oxygen-containing gas at temperature sufficient to burn coke from the catalyst, said catalyst is reactivated by contact thereof with a halogen, and the regenerated, reactivated catalyst is recycled to said reforming zone.

5.  The process of claim 4 characterized in that the rate at which the catalyst is withdrawn from said reforming zone and recycled thereto is sufficient to provide a residence time in said reforming zone of no more than about 100 hours.

6.  The process of any one of claims 2 to 5 characterized in that when the catalyst is regenerated by contact with hydrogen, the residence time of the catalyst within the reforming zone is in the range

0021854

of from about 0.1 hours to about 10 hours, and when the catalyst is regenerated by contact with an oxygen containing gas, the residence time within the reforming zone is in the range of from about 8 hours to about 12 hours.

7. The process of any one of claims 1 to 6 characterized in that fluidizable, magnetizable catalytic particles of the bed are of average diameter in the range of from about 50 microns to about 500 microns.

8. The process of any one of claims 1 to 7 characterized in that the axially applied magnetic field is non-time varying, substantially uniformly applied and has at least a substantial component along the direction of an external force field such that the bed has at least a component of magnetism along the direction of the external force field, and at least a portion of the particles of said bed is fluidized by a flow opposing said external force field at a superficial fluid velocity in the range between: (a) more than the normal minimum fluidization superficial fluid velocity required to fluidize said bed in the absence of said applied magnetic field; and, (b) less than the superficial fluid velocity required to cause time-varying fluctuations of pressure difference through said stably fluidized bed portion during continuous fluidization in the presence of said applied magnetic field.

9. The process of any one of claims 1 to 8 characterized in that the temperature within the regeneration zone is in the range of from about $800^{\circ}F$ ($426^{\circ}C$) to about $1100^{\circ}F$ ($593^{\circ}C$), and the total pressure ranges from about 50 psi ($0.352$ kg/cm$^2$) to about 500 psi ($3.5155$ kg/cm$^2$), and when hydrogen is employed to regenerate the catalyst the catalyst is contacted with from about 1 SCF (28.32 litres) to about 800 SCF (22656 litres) of hydrogen per hour per pound (0.4536 kg) of catalyst.

10. A reformed hydrocarbon product characterized in that it has been made by a process according to any one of claims 1 to 9.

| European Patent Office | EUROPEAN SEARCH REPORT | Application number EP 80 30 2243 |
|---|---|---|

## DOCUMENTS CONSIDERED TO BE RELEVANT

| Category | Citation of document with Indication, where appropriate, of relevant passages | Relevant to claim |
|---|---|---|
| X | <u>US - A - 4 136 016</u> (ROSENSWEIG)  * Claims 1,2 and 5; column 11, lines 55-63; column 36, lines 50-55; column 38, table XXI * | 1,7-10 |
| | -- | |
| X | <u>FR - A - 2 387 078</u> (EXXON)  * Claims 1-12,14,15; page 19, page 7, lines 9-29 * | 1,7-10 |
| | -- | |
| | <u>US - A - 2 908 636</u> (STEFFGEN)  * Figure , claims 1 and 2; example * | 1-6,9 |
| | -- | |
| | <u>BE - A - 507 950</u> (STANDARD OIL)  * Figure 1; claims * | 1,9 |
| | ---- | |

**CLASSIFICATION OF THE APPLICATION (Int. Cl.³)**

C 10 G 35/14
B 01 J 8/42

**TECHNICAL FIELDS SEARCHED (Int. Cl.³)**

C 10 G 35/14
B 01 J 8/42

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-10-1980 | MICHIELS |

EPO Form 1503.1 06.78